# EUROPEAN PATENT SPECIFICATION

(11) **EP 2 926 647 B1**
(45) Date of publication and mention of the grant of the patent: **23.05.2018**
(21) Application number: 13861043.1
(22) Date of filing: 13.11.2013
(51) Int. Cl.: A01G 3/08, B27B 17/00, B27B 17/08

(54) **BRUSHLESS CHAINSAW**
BÜRSTENLOSE KETTENSÄGE
SCIE À CHAÎNE SANS BALAIS

(30) Priority: 03.12.2012 CN 201210506084
(43) Date of publication of application: 07.10.2015
(73) Proprietor: Changzhou Globe Co., Ltd., Jiangsu 213023 (CN)
(72) Inventor: JIANG, Tengyun, Chang Zhou, Jiangsu 213023 (CN); CHEN, Yin, Chang Zhou, Jiangsu 213023 (CN); TIAN, Jianbo, Chang Zhou, Jiangsu 213023 (CN); CHEN, Hairong, Chang Zhou, Jiangsu 213023 (CN); LI, Biao, Chang Zhou, Jiangsu 213023 (CN)
(74) Representative: Bergenstråhle Group AB
(86) International application number: PCT/CN2013/001377
(87) International publication number: WO 2014/086095

(56) References cited:
- EP-A1- 2 416 932
- EP-A1- 2 465 654
- WO-A1-2011/098097
- CN-A- 101 337 357
- CN-A- 101 337 357
- CN-A- 101 668 616
- CN-U- 202 998 897
- CN-U- 202 998 897
- CN-Y- 201 179 671
- CN-Y- 201 179 671
- US-A- 5 685 080

## Description

### BACKGROUND OF THE INVENTION

### 1.Technical Field

The present invention relates to a brush-less chainsaw according to the preamble of claim 1, in particular to a brush-less chainsaw for gardening tools and electric tools.

### 2. Description of Related Art

Such a brushless chain saw is known from EP2465654A1.

Document EP2 416932A1 shows an electric brake controller with three or four switches in series for switching-off a brushed motor. In an embodiment, the main switch is divided with sub-switches, another switch is linked to the brake handle, and another switch is linked to a hook.

A chainsaw is a traditional electric cutting tool, usually used to trim or cut plants. Generally, the motor of the chainsaw drives the chain to perform cutting.

At present, most of the tool products in the market have the brushed motor drive, with the defects of limited service life of the carbon brush, low efficiency (generally about 50%), and because of load and other factors, about 30∼200Hr service life.

Even if the motors of the some products are provided with replaceable carbon brushes to prolong the service life, but, due to the limited service life of the commutator, the carbon brush is useless as long as the motor is replaced once because of expiration of the service life.

Besides, the tool products produced by some manufacturers are directly driven by brush-less motors, solving the problem of the service life of the brushed chainsaw. But, the driving tool has a relatively large working torque, and it is needed to greatly increase the motor size to obtain a large torque when the motor performs direct drive, so the defects such as high cost, large weight and large reverse kinetic potential of the brake are generated.

Traditional mechanical brake devices have complicated structures, are easily worn to lose efficiency after service for a long time, tend to reduce the braking effect, and have high subsequent maintenance cost.

### SUMMARY OF THE INVENTION

The present invention mainly solves the technical problem of providing a brush-less chainsaw. The brush-less chainsaw utilizes the energy consumption mode of the motor coils to realize the quick stopping of the motor, and the brush-less chainsaw takes advantage of high efficiency and long service life of the brush-less motor and uses a deceleration device to increase the output torque, thus achieving small size, low cost, large torque, and small braking current and optimizing the performance of the brush-less chainsaw.

To solve the above technical problems, the present invention is defined by the features of claim 1.

In a preferable embodiment of the present invention, the transmission device comprises a transmission body, an output shaft assembly, a gearbox cover and a chain wheel; the transmission body is fixedly connected to the power output end of the brush-less motor; the output shaft assembly is fixedly disposed in a hole in the transmission body; the gearbox cover is installed on the transmission body; the output end of the brush-less motor is connected with the output shaft assembly through a gear; and the output shaft assembly drives the chain wheel so as to drive the chain to rotate.

In a preferable embodiment of the present invention, the tooth profile of the gear is an involute profile or circular arc.

In a preferable embodiment of the present invention, the transmission device is a single-speed change structure, a multi-speed change structure, or a step-less speed change structure.

In a preferable embodiment of the present invention, the gear comprises a driving wheel and a driven wheel; when the size of the driving wheel is smaller than that of the driven wheel, the deceleration function can be conducted; when the size of the driving wheel is larger than that of the driven wheel, the acceleration function can be conducted.

In a preferable embodiment of the present invention, the housing is internally provided with an oil pump and an oil kettle; one end of the oil pump is connected to the transmission device, and the other end is connected with the oil kettle.

According to the present invention, the housing is connected with an alarm display device; the alarm display device is connected with the brush-less motor, the transmission device and the electronic commutator.

According to the present invention, the housing is connected with a switch trigger, a main switch, a first microswitch, a second microswitch, a brake backplate and a lighting switch; the switch trigger is linked with the main switch; the first microswitch and the second microswitch are linked with the brake backplate; the main switch, the first microswitch, the second microswitch and the lighting switch are all connected to the electronic commutator.

In a preferable embodiment of the present invention, the electronic commutator is also connected with the input end of the power supply, and the power supply mode of the electronic commutator is DC input or AC input.

In a preferable embodiment of the present invention, the power supply is a DC power supply; the input end of the power supply is connected with a detachable DC power supplier, a detachable portable battery pack or AC/DC transformer; alternatively the power supply is an AC power supply, and the input end of the power supply is connected to the mains supply.

In a preferable embodiment of the present invention, the housing is also provided with a main air inlet and an air outlet; the housing is internally provided with an air baffle; the dissipating plane of the electronic commutator is disposed behind the main air inlet or in front of the air outlet such that the air flow generated by rotation of the brush-less motor passes through the dissipating plane of the electronic commutator to bring the heat away.

The present invention has the beneficial effects that: the brush-less chainsaw of the present invention can utilize the energy consumption mode of the motor coils to realize the quick stopping of the motor, thus obviously reducing the cost and overall weight; and the brush-less chainsaw take advantage of high efficiency and long service life of the brush-less motor and uses a deceleration device to increase the output torque, thus achieving small size, low cost, a large torque and small braking current and optimizing the performance of the brush-less chainsaw.

### BRIEF DESCRIPTION OF THE DRAWINGS

Figure 1 is an exploded view of the brush-less chainsaw in one embodiment of the present invention.
Figure 2 is a structural view of the brush-less motor and transmission device in the brush-less chainsaw of the present invention.
Figure 3 is a main view of the brush-less chainsaw of the present invention.
Figure 4 is a control schematic view of the control process of the brush-less chainsaw of the present invention.
Figure 5 is a main view of the dissipating air path of the brush-less chainsaw of the present invention.
Figure 6 is a vertical view of the dissipating air path of the brush-less chainsaw of the present invention.

Marks of parts in the figures are as follows: 1. first microswitch, 2. electronic commutator, 3. brake backplate, 4. housing, 5. transmission device, 6. chain, 7. lateral cover tightening member, 8. power supply, 9. switch trigger, 10. main switch, 11, oil kettle, 12. brush-less motor, 14. oil pump, 15. transmission body, 16. output shaft assembly, 17. gearbox cover, 18. chain wheel, 19. alarm display device, 20. second microswitch, 21. lighting switch, 22. air inlet, 23. air outlet, 24. air baffle, 25. driving wheel, 26. driven wheel, 27. chain plate.

### DETAILED DESCRIPTION OF THE INVENTION

The preferable embodiments are described in detail with reference to the attached drawings such that those skilled in this field can more easily understand the advantages and characteristics of the present invention to more clearly define the protective scope of the present invention.

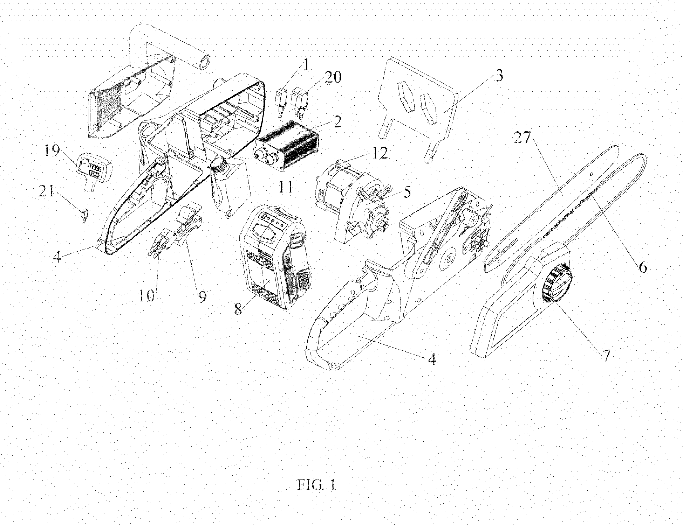

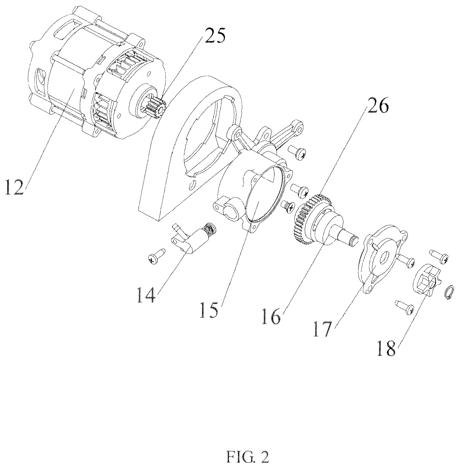

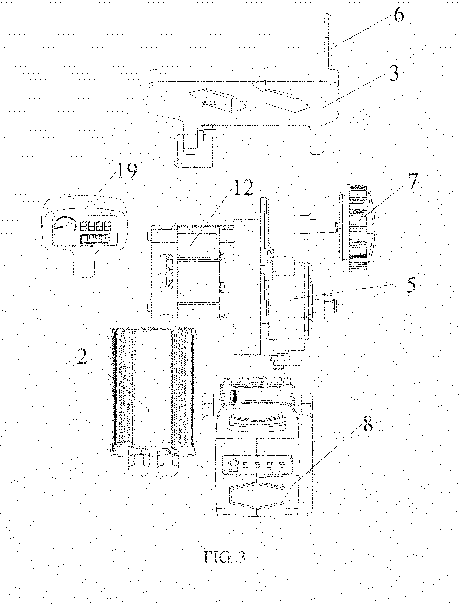

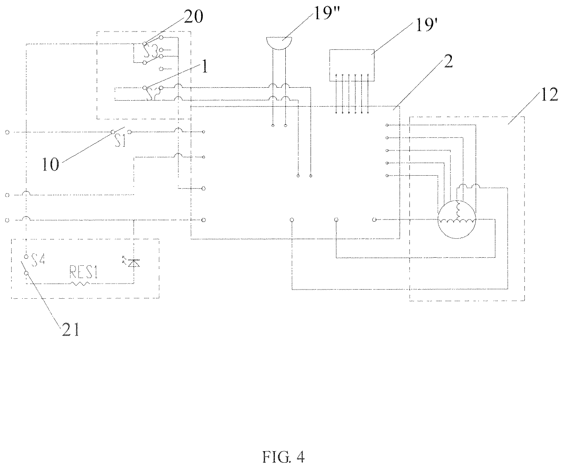

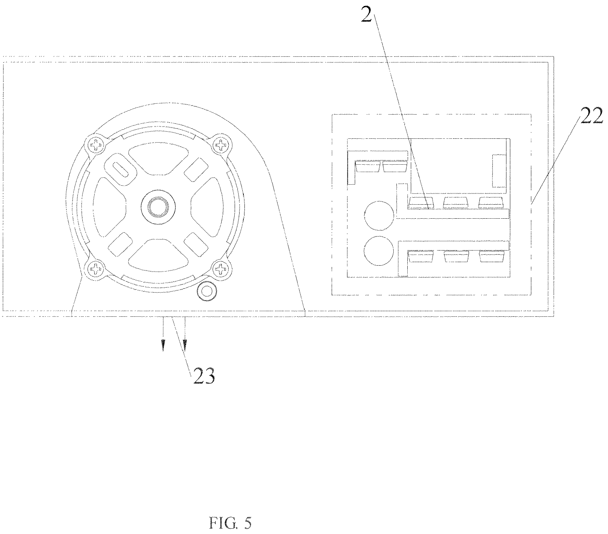

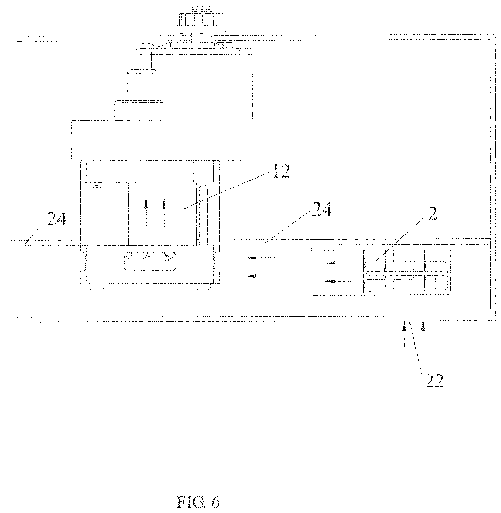

Refer to figures 1-6. An embodiment of the present invention includes:

A brush-less chainsaw comprises a housing 4, a brush-less motor 12, a transmission device 5, an electronic commutator 2, a chain 6, and a chain plate 27. The brush-less motor 12, the transmission device 5, and the electronic commutator 2 are disposed in the housing 25. The brush-less motor 12 is connected with the electronic commutator 2. The power output end of the brush-less motor 12 is connected with the transmission device.

In the present invention, the transmission device 5 comprises the brush-less motor 12, a transmission body 15, an output shaft assembly 16, a gearbox cover 17 and a chain wheel 18.

The transmission body 15 is fixedly connected to the power output end of the brush-less motor 12. The output shaft assembly 16 is fixedly disposed in a hole in the transmission body 15. The gearbox cover 17 is installed on the transmission body 15. The output end of the brush-less motor 12 is connected with the output shaft assembly 16 through a gear. The output shaft assembly 16 is linked with the chain 6 through the chain wheel 18.

Wherein, the tooth profile of the transmission device 5 may be an involute profile or circular arc. The involute teeth may be straight teeth, helical teeth or bevel teeth. The transmission device 5 may be a single-speed change structure, a multi-speed change structure or a step-less speed change structure, confirmed according to the size of the output torque. When the size of the driving wheel 25 is smaller than that of the driven wheel 26, the deceleration function can be conducted; on the contrary, and when the size of the driving wheel 25 is larger than that of the driven wheel 26, the acceleration function can be conducted.

The housing 4 is connected with an alarm display device 19; the alarm display device 19 is connected with the brush-less motor 12, the transmission device 5, and the electronic commutator 2.

Specifically, the alarm display device 19 may have the display function or alarm function only or have the display and alarm functions, and the fed function may be the working state of all parts of the whole brush-less chainsaw, or the remaining time that the brush-less chainsaw can work.

The housing 4 is also connected with a switch trigger 9, a main switch 10, a first microswitch 1, a second microswitch 20, a brake backplate 3 and a lighting switch 21.

The switch trigger 9 is linked with the main switch 10. The first microswitch 1 and the second microswitch 20 are linked with the brake backplate 3, which means that the first microswitch 1 and the second microswitch 20 are driven by the brake backplate 3 to switch on or off.

The main switch 10, the first microswitch 1, the second microswitch 20 and the lighting switch 21 all are connected to the electronic commutator 2.

The housing 4 is also connected with a lateral cover tightening member 7 which fixes the chain 6 at a position with a proper degree of tightness. The chain 6 is driven by the speed governor of the brush-less motor to perform cutting.

The housing 4 is internally provided with a power supply 8. The power supply 8 is connected with the electronic commutator 2. The power supply 8 is a DC power supply or an AC power supply, which can be configured upon needs.

When the power supply 8 is a DC power supply; the input end of the power supply 8 is connected with a detachable DC power supplier, a detachable portable battery pack or AC/DC transformer; when the power supply 8 is an AC power supply, and the input end of the power supply 8 is connected to the mains supply.

The housing 4 is internally provided with an oil pump 14 and an oil kettle 11; one end of the oil pump 14 is connected to the transmission device 5 and the other end is connected with the oil kettle 11.

In the present invention, the power supply mode of the electronic commutator 2 is DC power input or AC power input.

To reduce the axial length of the brush-less motor 12 and better utilize the inner space of the housing 4 of the chainsaw, in the present invention, the dissipating plane of the electronic commutator 2 is disposed behind the main air inlet or in front of the air outlet such that the air flow generated by the rotation of the brush-less motor 12 passes through the dissipating plane of the electronic commutator 2 to bring the heat away.

The dissipating plane of the electronic commutator 2 is disposed behind the main air inlet 22; the air inlet of the brush-less motor 12 is not provided with the main air inlet 22; the housing is internally provided with an air baffle 24 to enclose the brush-less motor 12 and the electronic commutator 2 in a relatively small space (this space has the air input only at the position of the main air inlet 22).

During working, cooling fans of the brush-less motor rotate to form negative pressure, and the cooling air goes in from the main air inlet 22, passes through the cooling surface of the electronic commutator 2 to bring away the heat, then enters the air inlet of the motor to take away the heat in the brush-less motor 12, and finally is discharged from the air outlet 23.

The control process of the brush-less chainsaw of the present invention comprises the following steps:

### a. Start control step

Start function: when the main switch 10 is closed, the electronic commutator 2 detects the position signal of a hall sensor on the brush-less motor 12 and gives a corresponding control signal to control current to pass through the three-phase coil on the brush-less motor 12 in turn, thus realizing the efficiency rotation of the brush-less motor 12 and driving the chain 6 to rotate to fulfill the aim of cutting; and when the main switch 10 is released, the brush-less motor 12 can slow down freely.

### b. Brake control step

The brake backplate 3 rotates to transmit the brake signal to the electronic commutator 2, and the microswitch 20 cuts off the power supply 8 of the brush-less motor 12 at the same time; the electronic commutator 2 short-circuits the coil of the brush-less motor 12 to realize the quick stopping of the brush-less motor 12, and the alarm display device 19 sounds or displays an alarm to the client.

The braking mode provided in the present invention utilizes the energy consumption mode of the coil of the brush-less motor 12 to realize the quick stopping of the motor, and the typical braking time is smaller than 0.15s.

This means that the coil of the brush-less motor 12 is utilized to generate the braking effect, and the braking effect can be achieved by only providing the electronic commutator 2 with a brake signal, while the cost and weight of the whole chainsaw will be lowered obviously.

The control process of the present invention also comprises an alarm display process and a protection process.

In the alarm display process, the whole brush-less chain's real-time working state can be displayed through the electronic commutator 2 and the alarm display device 19, for example, the real-time electric quantity, real-time working current, real-time saw temperature, real-time line-cutting speed, braking state prompt function, etc.

In the protection process, the power supply 8 and the electronic commutator 2 of the entire system can identify communication, and the battery discharge is integrated in the brush-less control system; when the battery is over-charged or over-current, or over-hot, the system connection is cut off to protect the battery system.

The power supply 8 and the electronic commutator 2 of the entire system can identify the communication, and the electronic commutator 2 can automatically control the adjustable output of the load and reduce the useless output of empty load to prolong the service life of the battery and fulfill the energy-saving purpose of the whole chainsaw.

The brush-less chainsaw of the present invention has the beneficial effects of:

utilizing the energy consumption mode of the motor coil to realize quick stopping of the motor, namely generating the braking effect to the motor coil simply by providing the control system with a brake signal, the cost and weight of the whole chainsaw will be lowered obviously;

taking advantage of high efficiency (generally over 80%) and long service life of the brush-less motor and using the deceleration device to increase the output torque, small size, low cost, large torque and small braking current are achieved and the performance of the whole chainsaw is optimized.

The above are only some embodiments of the present invention and shall not be regarded as limit to the present invention. Any equivalent structure or equivalent flow modifications made on the basis of the description and attached drawings of the present invention, or direct or indirect application to other related fields, shall fall within the protective scope of the present invention as defined by the claims.

## Claims

1. A brush-less chainsaw, comprising a housing (4), a brush-less motor (12), a transmission device (5), a power supply, an electronic commutator (2), a brake backplate (3), a chain plate (27), and a chain (6); the brush-less motor (12), the transmission device (5), and the electronic commutator (2) being disposed in the housing (4), the brush-less motor being connected with the electronic commutator (2); and an output shaft of the brush-less motor (12) being connected with the transmission device (5), **characterized in that** the housing (4) is connected with an alarm display device (19), the alarm display device (19) is connected with the brush-less motor (12), the transmission device (5), and the electronic commutator (2), the housing (4) being connected with a switch trigger (9), a main switch (10), a first microswitch (1), a second microswitch (20), the brake backplate (3) and a lighting switch (21), the switch trigger is linked with the main switch; the first microswitch and the second microswitch are linked with the brake backplate; the main switch, the first microswitch, the second microswitch, and the lighting switch being all connected to the electronic commutator (2).

2. The brush-less chainsaw according to claim 1, **characterized in that**, the transmission device comprises a transmission body, an output shaft assembly, a gearbox cover, and a chain wheel; the transmission body is fixedly connected to the power output end of the brush-less motor; the output shaft assembly is fixedly disposed in a hole in the transmission body; the gearbox cover is installed on the transmission body; the output end of the brush-less motor is connected with the output shaft assembly through a gear; and the output shaft assembly drives the chain wheel so as to drive the chain to rotate.

3. The brush-less chainsaw according to claim 2, **characterized in that**, the tooth profile of the gear is an involute profile or circular arc.

4. The brush-less chainsaw according to claim 2, **characterized in that**, the transmission device is a single-speed change structure, a multi-speed change structure, or a step-less speed change structure.

5. The brush-less chainsaw according to claim 2, **characterized in that**, the gear comprises a driving wheel and a driven wheel; when the size of the driving wheel is smaller than that of the driven wheel, the transmission device conducts the deceleration function; when the size of the driving wheel is larger than that of the driven wheel, the transmission device conducts the acceleration function structure.

6. The brush-less chainsaw according to claim 1, **characterized in that**, the housing is internally provided with an oil pump and an oil kettle; one end of the oil pump is connected to the transmission device, and the other end is connected with the oil kettle.

7. The brush-less chainsaw according to claim 1, **characterized in that**, the electronic commutator is also connected with the input end of the power supply, and the power supply mode of the electronic commutator is DC input or AC input.

8. The brush-less chainsaw according to claim 7, **characterized in that**, the power supply is a DC power supply; the input end of the power supply is connected with a detachable DC power supplier, a detachable portable battery pack or AC/DC transformer, alternatively the power supply is an AC power supply, and the input end of the power supply is connected to the mains supply.

9. The brush-less chainsaw according to claim 1, **characterized in that**, the housing is also provided with a main air inlet and an air outlet; the housing is internally provided with an air baffle; the dissipating plane of the electronic commutator is disposed behind the main air inlet or in front of the air outlet such that the air flow generated by rotation of the brush-less motor passes through the dissipating plane of the electronic commutator to bring the heat away.

## Patentansprüche

1. Bürstenlose Kettensäge mit einem Gehäuse (4), einem bürstenlosen Motor (12), einer Getriebevorrichtung (5), einer Stromversorgung, einem elektronischen Kommutator (2), einer Bremsen-Rückplatte (3), einer Kettenplatte (27) und einer Kette (6); wobei der bürstenlose Motor (12), die Getriebevorrichtung (5) und der elektronische Kommutator (2) in dem Gehäuse (4) angeordnet sind, der bürstenlose Motor mit dem elektronischen Kommutator (2) verbunden ist; und eine Ausgangswelle des bürstenlosen Motors (12) mit der Getriebevorrichtung (5) verbunden ist, **dadurch gekennzeichnet, dass** das Gehäuse (4) mit einer Alarmanzeigevorrichtung (19) verbunden ist, die Alarmanzeigevorrichtung (19) mit dem bürstenlosen Motor (12), der Getriebevorrichtung (5) und dem elektronischen Kommutator (2) verbunden ist, das Gehäuse (4) mit einem Schalterauslöser (9), einem Hauptschalter (10), einem ersten Mikroschalter (1), einem zweiten Mikroschalter (20), der Bremsen-Rückplatte (3) und einem Lichtschalter (21) verbunden ist, der Schalterauslöser mit dem Hauptschalter gekoppelt ist; der erste Mikroschalter und der zweite Mikroschalter mit der Bremsen-Rückplatte gekoppelt sind; wobei der Hauptschalter, der erste Mikroschalter, der zweite Mikroschalter und der Lichtschalter alle mit dem elektronischen Kommutator (2) gekoppelt sind.

2. Bürstenlose Kettensäge nach Anspruch 1, **dadurch gekennzeichnet, dass** die Getriebevorrichtung einen Getriebehauptteil, eine Ausgangswellenbaugruppe, eine Getriebeabdeckung und ein Kettenrad umfasst; der Getriebehauptteil fest mit dem Leistungsausgangsende des bürstenlosen Motors verbunden ist; die Ausgangswellenbaugruppe fest in einem Loch in dem Getriebehauptteil angeordnet ist; die Getriebeabdeckung am Getriebehauptteil installiert ist; das Ausgangsende des bürstenlosen Motors mittels eines Zahnrads mit der Ausgangswellenbaugruppe verbunden ist; und die Ausgangswellenbaugruppe das Kettenrad antreibt, um so die Kette zur Drehung anzutreiben.

3. Bürstenlose Kettensäge nach Anspruch 2, **dadurch gekennzeichnet, dass** das Zahnprofil des Zahnrads ein involutives Profil oder ein kreisförmiger Bogen ist.

4. Bürstenlose Kettensäge nach Anspruch 2, **dadurch gekennzeichnet, dass** die Getriebevorrichtung eine Einzelgeschwindigkeits-Änderungsstruktur, eine Mehrfachgeschwindigkeits-Änderungsstruktur oder eine stufenlose Geschwindigkeitsänderungsstruktur ist.

5. Bürstenlose Kettensäge nach Anspruch 2, **dadurch gekennzeichnet, dass** das Getriebe ein Antriebsrad und ein angetriebenes Rad umfasst; wenn die Größe des Antriebsrads kleiner als die des angetriebenen Rads ist, die Getriebevorrichtung die Verlangsamungsfunktion ausführt; und wenn die Größe des Antriebsrads größer als die des angetriebenen Rads ist, die Getriebevorrichtung die Beschleunigungsfunktionsstruktur ausführt.

6. Bürstenlose Kettensäge nach Anspruch 1, **dadurch gekennzeichnet, dass** das Gehäuse intern mit einer Ölpumpe und einem Ölbehälter ausgestattet ist; ein Ende der Ölpumpe mit der Getriebevorrichtung verbunden ist und das andere Ende mit dem Ölbehälter verbunden ist.

7. Bürstenlose Kettensäge nach Anspruch 1, **dadurch gekennzeichnet, dass** der elektronische Kommutator auch mit dem Eingangsende der Stromversorgung verbunden ist und der Stromversorgungsmodus des elektronischen Kommutators Gleichstromeingang oder Wechselstromeingang ist.

8. Bürstenlose Kettensäge nach Anspruch 7, **dadurch gekennzeichnet, dass** die Stromversorgung eine Gleichstromversorgung ist; das Eingangsende der Stromversorgung mit einer ablösbaren Gleichstromquelle, einem ablösbaren tragbaren Batteriepack oder einem Wechselstrom-/Gleichstromtransformator verbunden ist oder als Alternative die Stromversorgung eine Wechselstromversorgung ist und das Eingangsende der Stromversorgung mit der Netzversorgung verbunden ist.

9. Bürstenlose Kettensäge nach Anspruch 1, **dadurch gekennzeichnet, dass** das Gehäuse auch mit einem Hauptlufteinlass und einem Luftauslass ausgestattet ist; das Gehäuse intern mit einem Luftleitteil ausgestattet ist; die Ableitungsebene des elektronischen Kommutators hinter dem Hauptlufteinlass oder vor dem Luftauslass angeordnet ist, so dass die durch Drehung des bürstenlosen Motors erzeugte Luftströmung durch die Ableitungsebene des elektronischen Kommutators strömt, um die Wärme abzuführen.

## Revendications

1. Scie à chaîne sans balai, comprenant un boîtier (4), un moteur sans balai (12), un dispositif de transmission (5), une alimentation électrique, un commutateur électronique (2), une plaque arrière de freinage (3), une plaque à chaîne (27), et une chaîne (6) ; le moteur sans balai (12), le dispositif de transmission (5) et le commutateur électronique (2) étant disposés dans le boîtier (4), le moteur sans balai étant connecté au commutateur électronique (2) ; et un arbre de sortie du moteur sans balai (12) étant relié au dispositif de transmission (5), **caractérisé en ce que** le boîtier (4) est relié à un dispositif d'affichage d'alarme (19), **en ce que** le dispositif d'affichage d'alarme (19) est relié au moteur sans balai (12), au dispositif de transmission (5) et au commutateur électronique (2), le boîtier (4) étant relié à une gâchette d'interrupteur (9), à un interrupteur principal (10), à un premier micro-interrupteur (1), à un second micro-interrupteur (20), à la plaque arrière de freinage (3) et à un interrupteur d'éclairage (21), **en ce que** la gâchette d'interrupteur est reliée à l'interrupteur principal ; **en ce que** le premier micro-interrupteur et le second micro-interrupteur sont reliés à la plaque arrière de freinage ; l'interrupteur principal, le premier micro-interrupteur, le second micro-interrupteur et l'interrupteur d'éclairage étant tous reliés au commutateur électronique (2).

2. Scie à chaîne sans balai selon la revendication 1, **caractérisée en ce que** le dispositif de transmission comprend un corps de transmission, un ensemble formant arbre de sortie, un capot de boîte de vitesses et une roue à chaîne ; **en ce que** le corps de transmission est relié de manière fixe à l'extrémité de sortie de puissance du moteur sans balai ; **en ce que** l'ensemble formant arbre de sortie est disposé de manière fixe dans un orifice ménagé dans le corps de transmission ; **en ce que** le capot de boîte de vitesse est installé sur le corps de transmission ; **en ce que** l'extrémité de sortie du moteur sans balai est reliée à l'ensemble formant arbre de sortie par l'intermédiaire d'un engrenage ; et **en ce que** l'ensemble formant arbre de sortie entraîne la roue à chaîne de manière à entraîner la chaîne en rotation.

3. Scie à chaîne sans balai selon la revendication 2, **caractérisée en ce que** le profil de dents de l'engrenage est un profil développant ou en arc de cercle.

4. Scie à chaîne sans balai selon la revendication 2, **caractérisée en ce que** le dispositif de transmission est une structure à un seul changement de vitesse, une structure à changements de vitesse multiples, ou une structure à changement de vitesse progressif.

5. Scie à chaîne sans balai selon la revendication 2, **caractérisée en ce que** l'engrenage comprend une roue d'entraînement et une roue entraînée ; **en ce que**, lorsque la taille de la roue d'entraînement est inférieure à celle de la roue entraînée, le dispositif de transmission exécute une fonction de décélération ; **en ce que**, lorsque la taille de la roue d'entraînement est supérieure à celle de la roue entraînée, le dispositif de transmission exécute la structure de fonction d'accélération.

6. Scie à chaîne sans balai selon la revendication 1, **caractérisée en ce que** le boîtier est muni intérieurement d'une pompe à huile et d'un carter à huile ; **en ce qu'**une extrémité de la pompe à huile est reliée au dispositif de transmission et **en ce que** l'autre extrémité est reliée au carter à huile.

7. Scie à chaîne sans balai selon la revendication 1, **caractérisée en ce que** le commutateur électronique est également connecté à l'extrémité d'entrée de l'alimentation électrique, et **en ce que** le mode d'alimentation électrique du commutateur électronique est une entrée à courant continu ou une entrée à courant alternatif.

8. Scie à chaîne sans balai selon la revendication 7, **caractérisée en ce que** l'alimentation électrique est une alimentation à courant continu ; **en ce que** l'extrémité d'entrée de l'alimentation électrique est connectée à un générateur de courant continu amovible, à un bloc de piles portatif amovible ou à un transformateur alternatif/continu, **en ce qu'**en variante, l'alimentation électrique est une alimentation à courant alternatif, et **en ce que** l'extrémité d'entrée de l'alimentation électrique est connectée à l'alimentation sur secteur.

9. Scie à chaîne sans balai selon la revendication 1, **caractérisée en ce que** le boîtier est également muni d'un orifice d'entrée d'air principal et d'un orifice de sortie d'air ; **en ce que** le boîtier est muni intérieurement d'une chicane à air ; **en ce que** le plan de dissipation du commutateur électronique est disposé à l'arrière de l'orifice d'entrée d'air principal ou en face de l'orifice de sortie d'air de manière à ce que le flux d'air engendré par la rotation du moteur sans balai passe à travers le plan de dissipation du commutateur électronique afin de dissiper la chaleur.
